# EUROPÄISCHE PATENTSCHRIFT

(11) **EP 0 662 419 B1**
(45) Veröffentlichungstag und Bekanntmachung des Hinweises auf die Patenterteilung: **28.10.1998**
(21) Anmeldenummer: 95102619.4
(22) Anmeldetag: 15.11.1991
(51) Int. Cl.: B62K 21/22, B62K 21/16

(54) **Fahrrad-Vorderradkabel aus einem Verbundwerkstoff**
Bicycle front fork of composite material
Bicyclette avec une fourche avant d'un matériel composite

(30) Priorität: 10.12.1990 DE 4039405; 18.09.1991 DE 4131082
(43) Veröffentlichungstag der Anmeldung: 12.07.1995
(62) Teilanmeldung aus: 91119549.3
(73) Patentinhaber: LOOK S.A., 58004 Nevers Cédex (FR)
(72) Erfinder: Mercat, Jean-Pierre, F-37110 Chateau Renault (FR); Couturet, Jean-Pierre, F-58000 Nevers (FR)
(74) Vertreter: Finsterwald, Manfred, Dipl.-Ing., Dipl.-Wirtsch.-Ing.

(56) Entgegenhaltungen:
- DE-U- 9 006 510
- GB-A- 13 837
- US-A- 4 008 903
- US-A- 4 896 559

## Beschreibung

Die Erfindung betrifft eine Fahrrad-Vorderradgabel aus einem Verbundwerkstoff.

Verbundwerkstoffe finden aufgrund ihrer außergewöhnlichen Eigenschaften, insbesondere wegen ihres vorteilhaften Gewicht/Widerstand-Verhältnisses, im Fahrradbau und insbesondere für Fahrradrahmen zahlreiche Anwendungen und ermöglichen eine erhebliche Gewichtsverringerung sowie die Schaffung von aerodynamischen Formen für die einzelnen Rahmenstangen.

Die Vorderradgabel eignet sich jedoch schlecht zur Verwendung solcher Stoffe. Die herkömmlichen Gabeln aus Metall oder Leichtmetallegierungen enden nämlich an ihrem oberen Ende in einem zylindrischen Gabelkopf, der durch ein im Rahmen vorgesehenes Lenkrohr geführt und an den beiden Enden des Lenkrohrs mittels zweier Kugellager drehbar gelagert ist. Die Lenkstange ist am oberen Ende des Gabelkopfes mittels Einspannorganen befestigt.

Diese Struktur wurde aufgrund ihrer langerprobten Wirksamkeit und Einfachheit bei den ersten Versuchen, die Gabel aus Verbundwerkstoffen herzustellen, einfach beibehalten. Diese Versuche führten jedoch zu relativ schlechten Ergebnissen. Auf den am oberen Ende der Gabel vorgesehenen zylindrischen Gabelkopf werden nämlich beträchtliche Biegemomente ausgeübt, und zwar insbesondere in Höhe des unteren Lagers des zugehörigen Lenkkopfes bzw. Lenkrohrs. Im Falle eines Gabelkopfes aus Metall ist es einfach, Material und Wanddicke so zu wählen, daß diese Biegemomente ohne Verformung oder Bruchgefahr aufgenommen werden können. Handelt es sich jedoch um einen Gabelkopf aus einem Verbundwerkstoff, so ist es äußerst schwierig, ohne störende Erhöhung des Außendurchmessers des Gabelkopfes ein ausreichendes Trägheitsmoment zu erreichen.

Um einige dieser Nachteile zu beheben, wird in der US-A-40 08 903 eine aus Kunststoff gegossene Vorderradgabel mit zwei Gabelarmen vorgeschlagen, die miteinander verbunden sind, um einen oberen Gabelkopf zu bilden, welcher zwei nach hinten gerichtete Vorsprünge, nämlich einen oberen und einen unteren Vorsprung, aufweist. Diese Vorsprünge tragen beide Gelenkteile, welche mit ergänzenden Gelenkteilen am die Schwenkachse festlegenden Lenkkopf des Rahmens zusammenwirken. Dabei wird jedoch nicht erläutert, auf welche Weise die Festigkeit des Gabelkopfes sichergestellt wird. Außerdem zeigt der Gabelkopf eine Vielzahl von Unebenheiten, die die Aerodynamik des Fahrrades beeinträchtigen.

Ferner ist es wünschenswert, die Verbindung zwischen Gabel und Lenkstange mit einer Verstellmöglichkeit in der Höhe, nach vorne und hinten zu realisieren, damit sowohl die Körpergröße des Radfahrers als auch die besonderen Fahrbedingungen insbesondere bei Radrennen berücksichtigt werden können. Zu diesem Zweck sind Vorrichtungen mit zwei teleskopischen Verbindungen bekannt, deren eine vertikal und deren andere horizontal verläuft und die leicht aus Metall, aber nicht aus Verbundwerkstoffen hergestellt werden können.

In bestimmten Fällen, insbesondere bei Radrennen, wird die Lenkstange bis unter die Höhe des oberen Lagers des Lenkrohrs abgesenkt, und zwar mit Hilfe von Bügeln, die am oberen Ende der Gabelkopf befestigt sind und sich nach unten erstrecken. Diese Vorrichtungen sind kompliziert und erfordern zahlreiche Vorarbeiten sowie den Austausch von Bauteilen vor jeder entsprechenden Ein- oder Umstellung.

Der Erfindung liegt die Aufgabe zugrunde, eine Vorderradgabel aus einem Verbundwerkstoff zu schaffen, die Montage- und Einstellmöglichkeiten der Lenkstange zu vergrößern.

Diese Aufgabe wird bei einer Fahrrad-Vorderradgabel der eingangs genannten Art durch die Merkmale von Anspruch 1 gelöst.

Weitere vorteilhafte Ausgestaltungen der Erfindung sind in den Unteransprüchen beschrieben.

Weitere Einzelheiten und Vorteile der Erfindung ergeben sich aus der folgenden Beschreibung, in der auf die beiliegende Zeichnung Bezug genommen wird. Es zeigen:
- Figur 1: eine Seitenansicht einer erfindungsgemäßen Vorderradgabel,
- Figur 2: eine Vorderansicht der Gabel von Figur 1,
- Figur 3: einen horizontalen Schnitt durch die Gabel und den Rahmen nach der Linie III-III von Figur 1,
- Figur 4: einen vergrößerten vertikalen Schnitt durch ein Ausführungsbeispiel der Anlenkung der Gabel an dem Rahmen,
- Figur 5: einen entsprechenden vertikalen Schnitt durch eine Abwandlung der Anlenkung,
- Figur 6: eine perspektivische Teildarstellung einer zweckmäßigen Ausführungsform eines Gabelaufsatzes,
- Figur 7 a und Figur 7 b: eine Seitenansicht und eine Vorderansicht eines zusammen mit der erfindungsgemäßen Gabel verwendbaren verstellbaren Lenkstangenhalters in größerem Maßstab,
- Figur 8 a und Figur 8 b: entsprechende Ansichten einer Abwandlung des Lenkstangenhalters der Figuren 7 a und 7 b
- Figuren 9 bis 11: Skizzen von Abwandlungen des Lenkstangenhalters,
- Figur 12: einen Schnitt eines Teils einer bevorzugten Ausführungsform der Vorrichtung zur Montage der Lenkstange,
- Figur 13: einen Vertikalschnitt entsprechend Figuren 4 und 5 durch ein praktisches, bevorzugtes Ausführungsbeispiel des Gabelkopfes und seiner Anlenkung am Rahmen und
- Figur 14 a und Figur 14 b: eine Draufsicht und einen Schnitt eines Zwischenstücks, das zwischen den Gabelkopf und den Rahmen eingesetzt ist und als Drehanschlag dient.

Die in den Figuren gezeigte Vorderradgabel besteht aus einem Verbundwerkstoff, das heißt einem Werkstoff, der Fasern hoher Festigkeit wie Glasfasern, Aramidfasern, Kohlenstoffasern und dergleichen in einem Bindemittel aus Harz, wie Epoxyharz oder Polyamidharz, enthält.

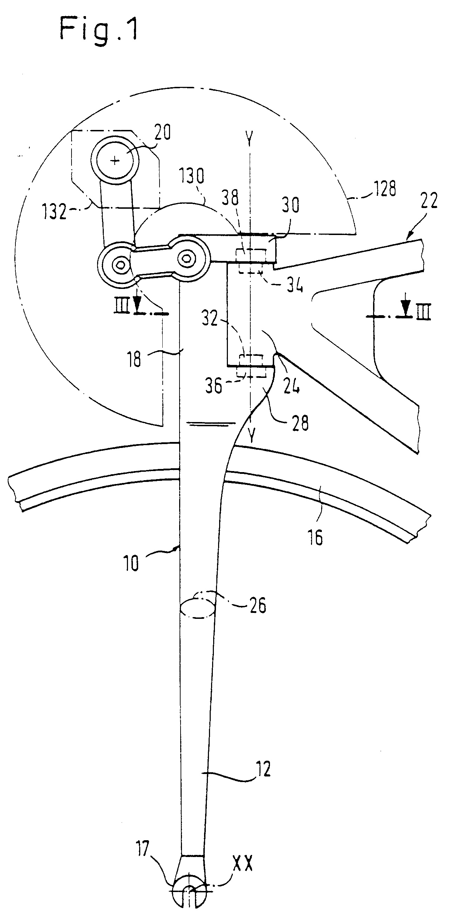

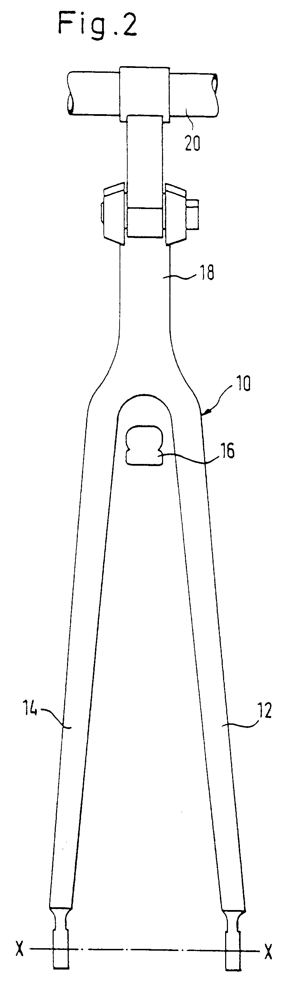

Wie die Figuren 1 und 2 zeigen, besteht die Gabel 10 aus zwei im wesentlichen geradlinigen, zueinander parallelen Armen 12 und 14, die einen für den Durchgang eines Rades 16 ausreichenden Abstand voneinander aufweisen. Es muß hier betont werden, daß die Figur 1 leicht im Uhrzeigersinn gedreht betrachtet werden muß, so daß die Gabel geneigt und die Radachse nach vorne, also nach links in der Figur versetzt ist. Die Enden der Arme bilden eine Gabel 17, die die Befestigung des nicht dargestellten Rades so gestattet, daß sich das Rad um eine Achse XX dreht. An ihrem oberen Ende vereinigen sich die beiden Arme 12, 14 zu einem Gabelkopf 18, der die Lenkstange 20 trägt und am Rahmen 22 des Fahrrads, und zwar an dem vorderen, überlicherweise "Lenkkopf" genannten Teil 24 des Rahmens drehbar gelagert ist, so daß ein Schwenken um die durch den Lenkkopf 24 definierte Schwenkachse YY möglich ist.

Auf diese Weise sind die die Mittellinien der beiden Arme 12, 14 der Vorderradgabel und die Mittellinie des Gabelkopfes 18 im wesentlichen in einer gemeinsamen Ebene angeordnet und die Drehachse XX des Rades ist in bezug auf die Schwenkachse YY um den nötigen Abstand nach vorne versetzt, um die Lenkstabilität des Fahrrads in bekannter Weise sicherzustellen, obwohl die Gabelarme 12, 14 geradlinig und nicht wie bekannten Fahrrädern gebogen sind. Die Vorteile der geradlinigen Gabelarme bestehen in einer Vereinfachung der Herstellung und einer verbesserten Festigkeit gegen Druck- und Biegekräfte.

Die Gabelarme besitzen einen ovalen Querschnitt 26, damit sie einen geringeren aerodynamischen Widerstand bieten.

Der Gabelkopf 18 befindet sich vor dem Lenkrohr 24. Er weist zwei nach hinten gerichtete Vorsprünge auf, und zwar einen unteren Vorsprung 28, der sich gerade über dem Bereich befindet, in dem sich die beiden Arme 12, 14 miteinander vereinigen, und einen oberen Vorsprung 30, der am oberen Ende des Gabelkopfes 18 vorgesehen ist. Der Abstand zwischen den beiden Vorsprüngen entspricht dabei im wesentlichen der Länge des Lenkkopfes bzw. Lenkrohrs 24. Der Lenkkopf ist zwischen den beiden Vorsprüngen montiert und trägt an seinen Enden Gelenkteile 32, 34, die mit ergänzenden, an den Vorsprüngen vorgesehenen Gelenkteilen 36, 38 zusammenwirken, wodurch die Lenkachse YY definiert wird. Ausführungsformen dieser Gelenkteile werden im nachstehenden ausführlicher beschrieben.

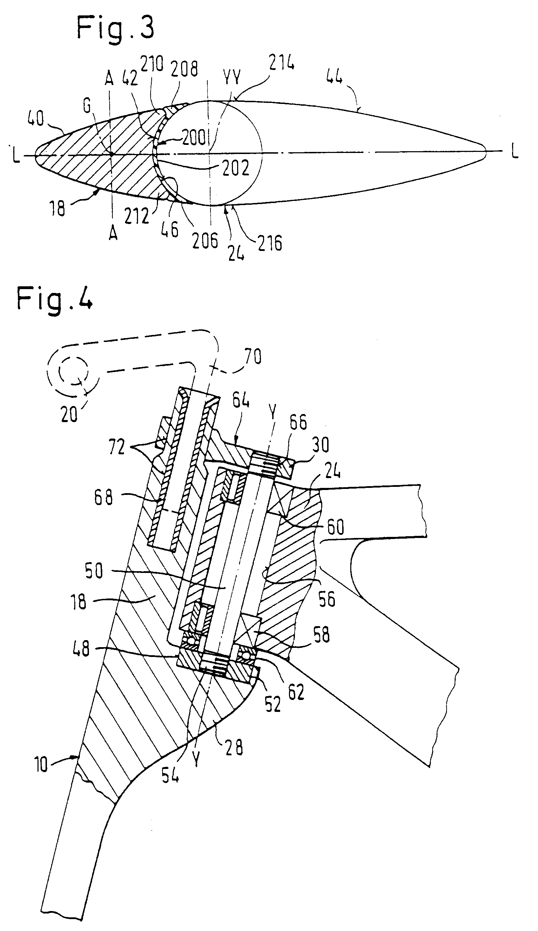

Der Querschnitt des Gabelkopfes entsprechend der Linie III-III von Figur 1 ist in Figur 3 mit einer voll ausgezogenen Linie gezeichnet, während der Querschnitt des Lenkkopfes mit zugehörigem Rahmenteil in dieser Figur schematisch mit einer dünnen Linie dargestellt ist.

Der Querschnitt des Gabelkopfes 18 hat einen aerodynamischen, etwa pfeilspitzenartigen Umriß, der aus einem etwa spitzkuppelförmigen Außenteil 40 und einer konkaven Basis 42 in Form eines Kreisbogens besteht, der auf die Lenkachse YY zentriert ist. Der Querschnitt des Lenkkopfes 24 hat ebenfalls eine aerodynamische Außenkontur 44, welche diejenige des Gabelkopfes 18 vervollständigt und vorne durch einen konvexen Teil 46 in Form eines Kreissegmentes abgeschlossen ist, das auf die Lenkachse YY zentriert ist, und zwar derart, daß zwischen den Gabelkopf 18 und dem Rohr 24 ein kleines Spiel verbleibt.

Die Umrisse des Gabelkopfs 18 und des Lenkkopfes 24 bilden zusammen eine Umrißkontur in Form eines Wassertropfens.

Die Breite des Gabelkopfs 18 ist im wesentlichen gleich derjenigen des Lenkrohrs 24. Die erforderliche Festigkeit wird durch die Dimensionierung der Länge und die Wahl der Umfangskontur des Querschnitts des Gabelkopfs 18 gewährleistet. Es kann auf diese Weise gewährleistet werden, daß das Trägheitsmoment zumindest bezüglich einer Achse AA, die senkrecht zur Längsachse LL des Rades verläuft und durch den Schwerpunkt G des Querschnitts geht, zumindest gleich einem vorgegebenen Wert ist, so daß der Gabelkopf 18 ohne Deformation den um die Linie AA auftretenden Biegemomenten standhalten kann. Das Trägheitsmoment bezüglich der Längsachse LL ist ebenfalls zumindest gleich einem vorbestimmten Wert, so daß der Gabelkopf 18 den Biegemomenten um diese Längsachse problemfrei widerstehen kann.

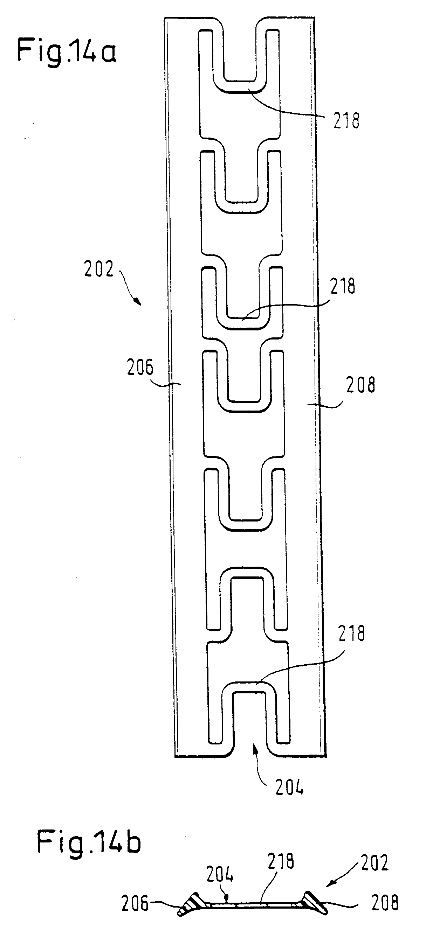

Wie in Figur 3 gezeigt, ist in einem Zwischenraum 200, der den Gabelkopf 18 und das Lenkrohr 24 trennt, vorteilhafterweise ein Zwischenstück in Form eines Bandes 202 aus elastomerem Material vorgesehen, das in Figuren 14 a und 14 b im einzelnen dargestellt ist. Das Band 202 umfaßt einen zentralen Streifen 204, dessen Dicke höchstens gleich der Weite des Zwischenraums 200 ist und dessen Breite wenig kleiner als die Länge des Zwischenraums in Horizontalrichtung ist. Das Band 202 besitzt an beiden Seiten Längswülste 206, 208, die sich, im eingebauten Zustand, vertikal im wesentlichen über die gesamte Länge des Lenkrohres erstrecken und deren Profil im Innenbereich entsprechend dem Gabelkopf 18 und dem Lenkrohr 24 und im Außenbereich so ausgebildet ist, daß die Einheit der Außenkontur zwischen Gabelkopf 18 und Lenkrohr 24 so vollkommen wie möglich sichergestellt ist.

Das Band 202 erfüllt also zwei wichtige Funktionen: zum einen verbessert es die Aerodynamik der Einheit Gabelkopf 18 - Lenkrohr 24, indem die Einheitlichkeit ihrer tropfenförmigen Außenkontur gewährleistet wird, zum anderen bildet es einen seitlichen Stoßdämpfer, wenn der Gabelkopf 18 in bezug auf das Lenkrohr 24 in eine Drehgrenzlage gelangt, in der die eine oder die andere der beiden nach hinten gerichteten Lippen 210, 212 des Gabelkopfprofils in Anlage mit der einen oder anderen Seite 214, 216 des Lenkrohrs gelangt. Im letzteren Fall wird der entsprechende Längswulst 206 bzw. 208 zwischen der Lippe 210 bzw. 212 des Gabelkopfes 18 und der entsprechenden Seite 214 bzw. 216 des Lenkrohres 24 zusammengedrückt, so daß ein direkter Kontakt zwischen den letzteren verhindert wird und eine Beschädigung des Verbundmaterials des Gabelkopfes 18 und / oder des Lenkrohres 24 vermieden wird.

Der zentrale Streifen 204 besteht vorteilhafterweise aus einer Reihe von Querstegen 218, die wenigstens annähernd U-förmig sind, um eine gewisse Längselastizität zu bieten. Es ist jedoch gleichfalls möglich, gerade Querstege oder einen über die gesamte Länge des Bandes 202 durchgehenden Streifen vorzusehen, der eine gewisse Elastizität aufweist. Bei der Montage wird also der zentrale Streifen 204 nur wenig beansprucht und die Längswülste 206, 208 sind ständig zwischen dem Gabelkopf 18 und dem Lenkrohr 24 in Anlage.

Figur 4 zeigt eine erste Ausführungsform des Gelenks zwischen dem Gabelkopf 18 und dem Lenkkopf 24. Der untere Vorsprung 28 ist mit der Gabel 10 aus einem Stück geformt und besitzt eine Bohrung 48 zur Aufnahme einer Achse 50. Der Vorsprung 28 besitzt vorzugsweise einen ringförmigen Einsatz 52 mit Innengewinde, und die Achse endet in einem mit Gewinde versehenen Teil 54, der in den Einsatz 52 eingeschraubt ist. Das Lenkrohr 24 besitzt einen zylindrischen Durchgang 56, der von der Achse 50 durchsetzt ist und an dessen beiden Enden zwei Wälzlager 58 und 60, vorzugsweise Nadellager, montiert sind, die die Achse 50 aufnehmen. Ein Druckkugellager 62 ist zwischen die Unterseite des Lenkkopfes 24 und die Oberseite des Vorsprungs 28 eingesetzt und nimmt die in der Lenkachse YY wirkenden Kräfte auf.

Der obere Vorsprung 30 ist an einem Aufsatz 64 vorgesehen, der am oberen Ende des Gabelkopfes 18 form- und kraftschlüssig auf beliebige Weise, beispielsweise durch Verklebung, befestigt ist. Er besitzt eine zur Lenkachse YY koaxiale Bohrung 66, die das obere Ende der Achse 50 vorzugsweise ohne Spiel aufnimmt. Die Achse besitzt an ihrem oberen Ende beispielsweise einen Innensechskant, so daß sie mit Hilfe eines Innensechskantschlüssels aus dem Einsatz ausgeschraubt und anschließend zum Ausbau der Gabel herausgezogen werden kann.

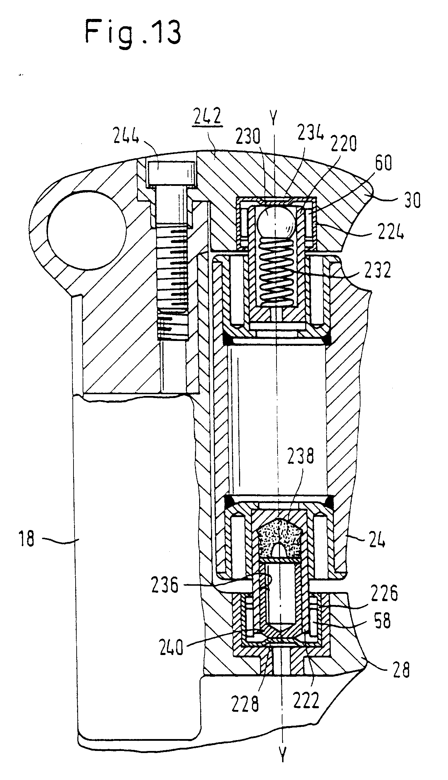

Daß die Wälzkörper, die zwischen die Gelenkzapfen und die Einsätze eingesetzt sind, Wälznadeln sind, hat den Vorteil, daß diese Wälzkörper gegen Radialkräfte sehr widerstandsfähig sind, ohne langfristig eine Einkerbung oder Beschädigung der Wälzflächen zu bewirken, da die Nadeln und die zugeordneten Wälzflächen in linienförmigen Kontakt miteinander stehen. Zur Aufnahme von entlang der Achse YY wirkenden Axialkräften kann auf ein einen Anschlag bildendes Wälzlager verzichtet und ein Metall/Metall-Kontakt auf einer sehr kleinen Fläche um die Schwenkachse YY herum vorgesehen werden, wie in Figur 13 gezeigt. In dieser Figur trägt das Lenkrohr 24 die beiden Gelenkzapfen, das heißt einen oberen Gelenkzapfen 220 und einen unteren Gelenkzapfen 222, und der obere Vorsprung 30 sowie der untere Vorsprung 28 des Gabelkopfes 18 weisen Büchsen 224 bzw. 226 auf, die die Außenkäfige von Nadellagern bilden, während die beiden Gelenkzapfen selbst als Innenkäfige dieser Nadellager dienen.

Der untere Gelenkzapfen 222 gelangt auf einer sehr verringerten Kontaktfläche in Eingriff mit einem Buckel 228 am Boden der Büchse 226 des unteren Vorsprungs 28. Die Axialkräfte zwischen der Gabel und dem Rahmen, die zwischen dem unteren Gelenkzapfen 220 und dem Buckel 228 übertragen werden, werden also in ein sehr kleines Reibmoment umgesetzt, das nicht stört, vor allem wenn man berücksichtigt, daß die Drehgeschwindigkeiten zwischen der Gabel und dem Rahmen vernachlässigbar sind.

In derselben Figur erkennt man, daß das axiale Montagespiel dadurch ausgeglichen wird, daß der obere Gelenkzapfen 220 eine Kugel 230 trägt, die von einer Feder 232 nach oben gegen den Boden 234 der oberen Büchse 224 gedrückt wird. Weiter umfaßt der untere Schwenkzapfen eine Stoßdämpfervorrichtung, die in folgender Weise gebildet ist: Der Schwenkzapfen 222 ist an seinem unteren Ende mit einer axialen Sackbohrung 236 versehen. Ein Block 238 aus Dämpfungsmaterial ist im hinteren Innenbereich der Bohrung 236 aufgenommen und ein Kolben 240 ist gleitend in dem unteren Teil der Sackbohrung 236 aufgenommen und ragt aus dieser hervor, um in Eingriff mit dem Buckel 228 zu gelangen. Dies gestattet in vorteilhafter Weise, Stöße und Vibrationen zwischen der Gabel und dem Rahmen abzufangen.

Nach Figur 13 ist die Demontierbarkeit der Gabel dadurch sichergestellt, daß der obere Vorsprung 30 des Gabelkopfes 18 an einem abnehmbaren Teil 242 vorgesehen ist, das auf dem Gabelkopf 18 mit einer Schraube 244 befestigt ist. Es ist also ausreichend, diese Schraube 244 herauszuschrauben, um das abnehmbare Teil 242 von der Gabel zu trennen. Zum Beispiel ist dies insbesondere für den Transport des Fahrrades von Vorteil.

Wie die Figur 4 zeigt, besitzen der Gabelkopf 18 und der Aufsatz 64 fluchtende Bohrungen 72, in die eine Buchse 68 eingepreßt ist, die zur Aufnahme einer Lenkstange 70 dient. Die Bohrung 72 erstreckt sich in der Stange über eine relativ kurze Strecke und endet weit oberhalb des unteren Vorsprungs 28. Die dieser Bohrung entsprechende Wegnahme von Material hat nämlich zur Folge, daß die Trägheitsmomente des Querschnitts verringert werden, was in Höhe des unteren Vorsprungs nicht wünschenswert ist. Dagegen ist diese Reduzierung im oberen Teil des Gabelkopfes, in dem die auftretenden Biegemomente weniger stark sind, ohne störende Auswirkung.

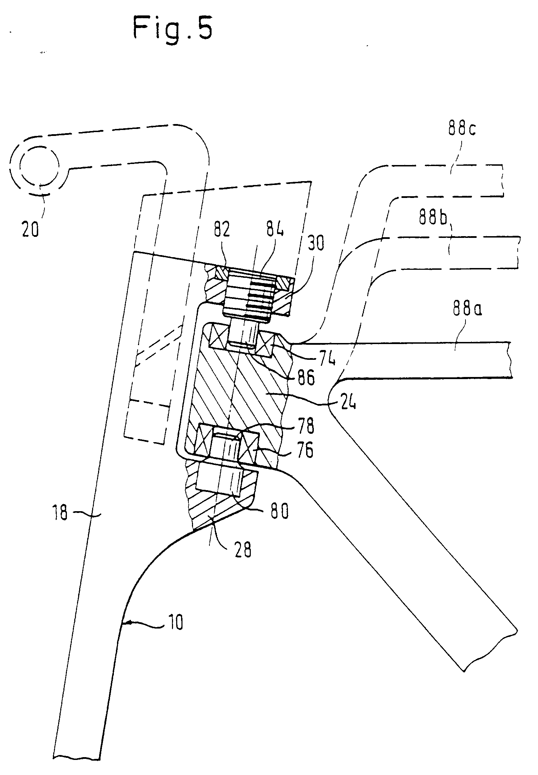

Bei der in Figur 5 gezeigten Ausführungsform trägt der Lenkkopf am oberen und am unteren Ende jeweils ein Wälzlager 74 bzw. 76. Der untere Vorsprung 28 trägt ein kurzes zylindrisches Element 78, das beispielsweise von einer Verlängerung eines in dem Vorsprung befestigten Einsatzes 80 gebildet ist und in das untere Wälzlager 76 eintritt. Der obere Vorsprung 30 ist mit dem Gabelkopf 18 aus einem Stück geformt und besitzt einen Einsatz 82 mit einem Innengewinde, in das ein Block 84 eingeschraubt ist, der ebenfalls durch ein kurzes zylindrisches Element 86 verlängert ist, das in das obere Wälzlager 74 eintritt. In diesem Fall kann der Lenkkopf 24 des Rahmens massiv ausgeführt sein.

Diese Lösung ist besonders einfach und robust. Dagegen erfordert die einstückige Ausbildung des oberen Vorsprungs 30 und des Gabelkopfes 18 entweder mehrere Formen für die Gabelherstellung, bei denen die Vorsprünge zur Berücksichtigung der verschiedenen Rahmenhöhen und damit Rohrhöhen in verschiedenen Abständen angeordnet sind, oder eine Ausrüstung aller Rahmen unabhängig von ihrer Höhe mit Lenkrohren gleicher Abmessung. Die zweite Lösung ist in Figur 5 mit unterbrochenen Linien gezeichnet, wobei die oberen Rahmenstangen 88 a, 88b, 88c an ein und dasselbe Lenkrohrmodell über mehr oder weniger weit hochgezogene Teile anschließen.

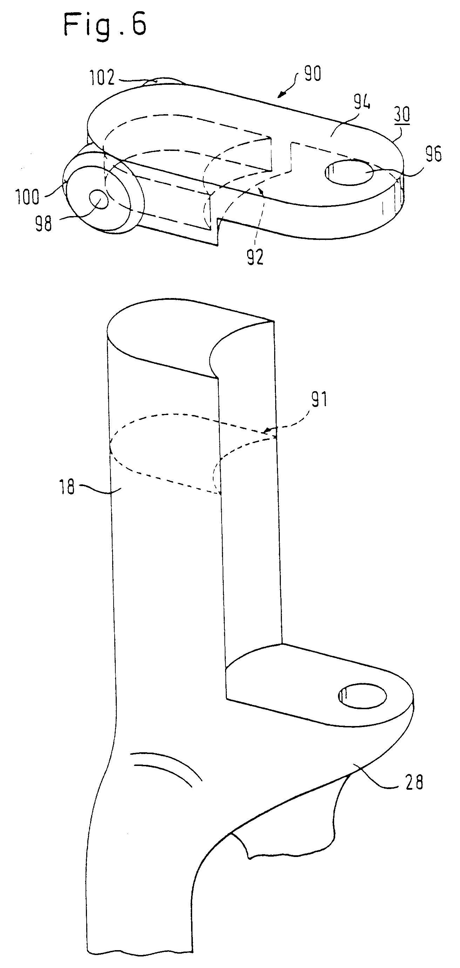

Die perspektivische Teilansicht von Figur 6 zeigt eine Variante eines Aufsatzes 90, an dem gleichzeitig der obere Vorsprung 30 und eine Lenkstangenhalterung ausgebildet sind, ohne daß im Gabelkopf 18 eine Bohrung vorgesehen werden muß. Dieser Aufsatz gestattet außerdem eine standardisierte Herstellung der Gabel, das heißt mit einem Gabelkopf von einer Länge, die dem längsten Lenkkopf eines Rahmens mit der größten Höhe entspricht, wobei der Gabelkopf dann auf diejenige Länge zugeschnitten wird, die dem Lenkkopf des Rahmens entspricht, an dem die Gabel montiert werden soll. Dies ist strichliert bei 91 in Figur 6 gezeigt.

Der Aufsatz 90 besitzt die allgemeine Form einer Platte, die an ihrer Unterseite eine Aussparung 92 mit einer dem Umriß des Gabelkopfs entsprechenden Form aufweist. Wenn der Gabelkopf 18 auf die gewünschte Länge zugeschnitten ist, wird der Aufsatz einfach auf das Ende des Gabelkopfes aufgesteckt und mit diesem verklebt. Der Aufsatz besitzt eine sich nach hinten erstreckende Verlängerung 94, die den oberen Vorsprung 30 bildet und von einer Bohrung 96 durchsetzt ist, die entweder wie in Figur 4 zur Aufnahme des Endes einer feststehenden Achse oder wie in Figur 5 zur Aufnahme eines eingeschraubten Blocks mit einem Achszapfen ausgebildet ist.

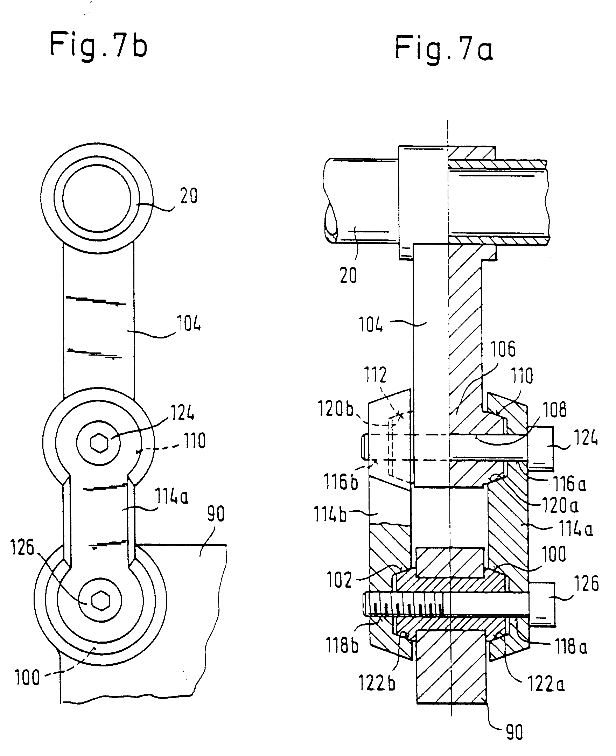

An seinem vorderen Ende ist der Aufsatz 90 von einer horizontalen Querbohrung 98 durchsetzt und besitzt an beiden Enden dieser Bohrung vortretende kegelstumpfförmige Klemmflächen 100 und 102, die die Montage der Lenkstange auf die anhand der Figuren 7 bis 11 beschriebene Weise gestatten.

Die Lenkstange 20 kann jedem bekannten Typ entsprechen und wird deshalb in den Figuren nicht vollständig dargestellt.

Nach den Figuren 7 a und 7 b ist ein kurzes Rohr 104 in der Mitte des Mittelabschnitts der Lenkstange 20 mit Hilfe eines bekannten Einspannorgans befestigt und verläuft senkrecht zu diesem Mittelabschnitt.

Am Ende des Rohrs 104 ist ein Block 106 vorgesehen, der von einer horizontalen Querbohrung 108 durchsetzt ist. An den beiden Enden dieser Bohrung sind zwei vortretende kegelstumpfförmige Klemmflächen 110 und 112 ausgebildet. Zwei längliche Platten 114 a, 114 b mit Löchern 116 a, 118 a, 116 b, 118 b und hohlkegelstumpfförmigen Klemmflächen 120 a, 122 a, 120 b, 122 b in Nähe ihrer Enden sind zu beiden Seiten des Aufsatzes 90 der Gabel und des Blocks 106 angeordnet. In den Bohrungen des Aufsatzes und des Blocks sitzen Bolzen 124, 126, die angezogen werden, so daß die Klemmflächen der länglichen Platten einerseits an die Klemmflächen 100, 102 des Aufsatzes und andererseits an die Klemmflächen 110, 112 des Blocks fest angedrückt werden. Auf diese Weise ist eine Verstellung der Lenkstange 20 sowohl in der Höhe als auch nach vorne und hinten um zwei Drehachsen möglich, die von den Achsen der kegelstumpfförmigen Klemmflächen gebildet werden. Zum Zweck dieser Verstellung werden die Bolzen 124, 126 gelockert und anschließend wieder angezogen.

Der Einstellbereich hängt von der Länge des Rohrs 104 und der Platten 114 a, 114 b ab. Beispielsweise läßt sich der in den Figuren 1 und 2 durch die Kreisbögen 128, 130 abgegrenzte Bereich erreichen, der erheblich größer als der bei herkömmlichen Vorrichtungen bestehende Einstellbereich 132 ist. Insbesondere stellt man fest, daß die Lenkstange so weit abgesenkt werden kann, daß sie sich weit unter dem oberen Ende der Gabel befindet, ohne daß hierzu Bauteile abzubauen oder auszutauschen sind.

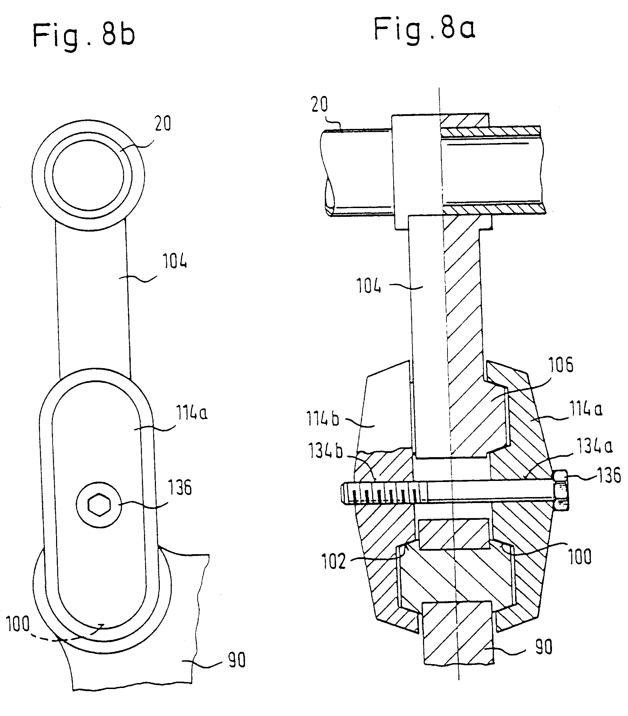

Bei der in den Figuren 8 a und 8 b gezeigten Abwandlung besitzen der Aufsatz 90 und der Block 106 keine Querbohrung. Die länglichen Platten 114 a, 114 b weisen jeweils eine Mittenbohrung 134 a, 134 b auf, und ein einziger Spannbolzen 136, der diese Bohrungen durchsetzt, dient zur Festspannung an den beiden Einstellachsen.

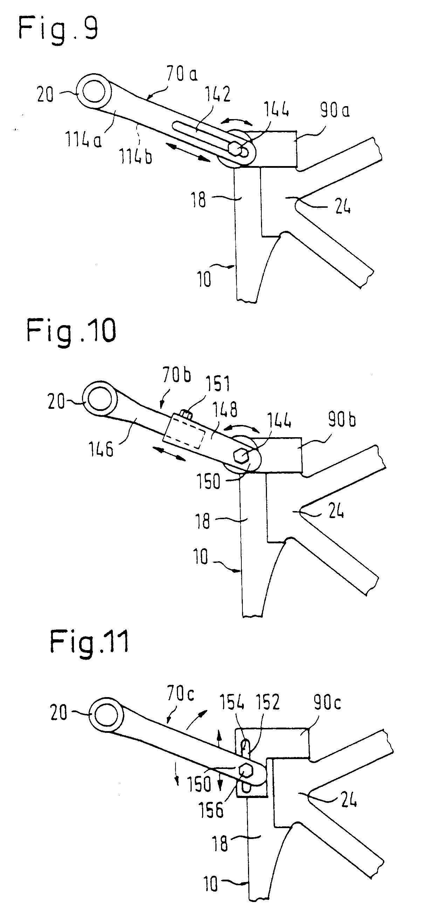

Weitere Möglichkeiten sind in den skizzenartig ausgeführten Figuren 9 bis 11 dargestellt:
- Verstellung durch Drehung um eine am Gabelaufsatz definierte Achse und durch Verschiebung längs der zwei Klemmplatten nach Figur 9; in diesem Falle besitzt der Aufsatz zwei Klemmflächen und eine zugeordnete Drehachse analog der anhand der Figuren 7 a und 7 b erläuterten Ausführungsform. Das Trägerorgan 70 a zur Befestigung der Lenkstange 20 besteht aus zwei zueinander parallelen Platten 114 a, 114 b, die beide mit Langlöchern 142 versehen sind, deren seitliche Begrenzungsflächen gleichzeitig Blockierflächen bilden. Durch die Bohrung im Aufsatz 90 a erstreckt sich ein Klemmorgan 144, beispielsweise eine Klemmschraube, dieses Klemmorgan durchdringt auch die Langlöcher 142 der Platten und gestattet es, die Platten 114 a, 114 b sowohl hinsichtlich Rotation und Längsbewegung zu fixieren;
- Verstellung durch Rotation um eine am Gabelaufsatz vorgesehene Achse und durch Translation bzw. Verschiebung einer teleskopischen Anordnung, welche die Lenkstange trägt. Dies ist in Figur 10 gezeigt. In diesem Falle ist der Aufsatz 90 b im wesentlichen identisch zu dem Aufsatz nach Figur 9 ausgebildet. Das Trägerteil 70 b, das zur Befestigung der Lenkstange dient, besteht jedoch aus zwei teleskopisch miteinander verbundenen Teilen 146, 148. Das eine Teil 146 besitzt am Ende eine Klemmaufnahme für die Lenkstange 20, und das andere Teil ist am Ende gabelförmig ausgebildet und besitzt Ansätze 150, die mit Öffnungen versehen sind und deren Innenflächen gleichermaßen Klemmflächen bilden. Eine zur vorhergehenden Schraube beispielsweise identisch ausgebildete Klemmschraube 144 durchsetzt die Ansätze 150 sowie die Bohrung im Aufsatz 90 b. Diese Klemmschraube allein ermöglicht eine Blockierung gegen Rotation, während die gegenseitige Blockierung der zwei teleskopischen Teile 146, 148 durch eine eigene Blockierschraube 151 gewährleistet wird;
- Verstellung durch Rotation um eine Achse, die selbst an der Gabel verschiebbar gehalten ist, wie dies Figur 11 zeigt. In diesem Falle besitzt der Lenkstangenträger 70 c eine feste Länge und ist am Ende gabelförmig ausgebildet, wobei die beiden Gabelwangen 150 mit Öffnungen analog der Ausführungsform nach Figur 10 versehen sind. Der Aufsatz 90 c besitzt jedoch ein im wesentlichen verlaufendes Langloch 152, dessen Begrenzungsränder 154 Blockierflächen bilden. Eine Klemmschraube 156 ist durch die beiden Ansätze des Trägerelements 70 c sowie durch das Langloch 152 des Aufsatzes 90 c geführt. Diese Klemmschraube ermöglicht gleichzeitig eine Blockierung bezüglich Rotation und Translation.

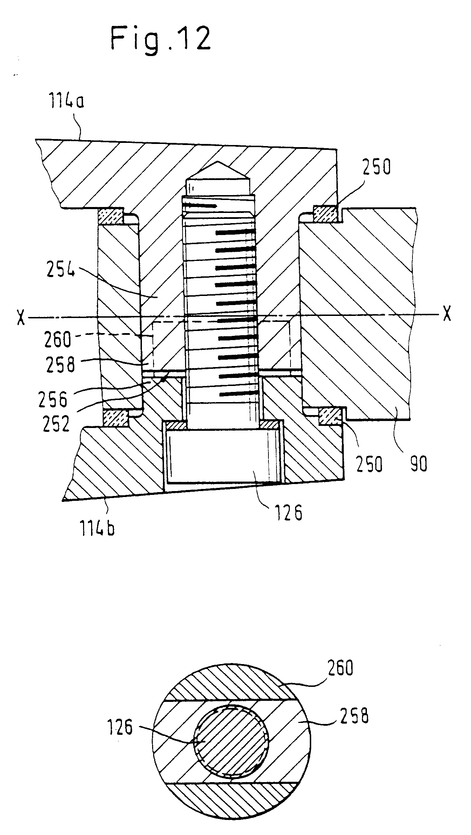

Bei der besonders bevorzugten, in Figur 12 dargestellten Ausführungsform sind die Klemmflächen eben und Ringe 250 aus Keramikmaterial sind zwischen den Aufsatz 90 der Gabel und die länglichen Platten 114 a, 114 b, also zwischen die letzteren und den Block 106 der Lenkstange eingesetzt. Diese Ausführungsform ist zugleich besonders wirtschaftlich, da es genügt, ebene Klemmflächen herzustellen und da die Keramikringe wenig teuer sind, und besonders wirksam, da das Keramikmaterial einen hervorragenden Reibungskoeffizienten gegenüber dem Material, aus dem der Aufsatz der Gabel, die länglichen Platten und der Block der Lenkstange besteht, aufweist.

In Figur 12 ist weiter zu erkennen, daß die beiden länglichen Platten über eine formschlüssige Verbindung 252 miteinander zusammenwirken. Hierzu umfassen die beiden Platten Vorsprünge 254, 256, die, wie beispielsweise dargestellt, um die Drehachse herum angeordnet sind, wobei der eine in Form eines Einsteckteils 258 und der andere in Form eines dazu komplementären Aufnahmeteils 260 endet. Bei der dargestellten Ausführungsform wird das Einsteckteil von einem Zapfen 258 gebildet, der im wesentlichen parallel zur Längsrichtung der länglichen Platten 114 a, 114 b ist, und das Aufnahmeteil 260 besteht aus einem Schlitz, der in gleicher Weise zu dieser Längsrichtung parallel ist. Dank dieser Anordnung nimmt die Montageeinheit der Lenkstange 20 besonders gut um die horizontale Längsachse xx des Fahrrades wirkende Momente auf, die erzeugt werden können, wenn der Fahrer unterschiedliche und / oder sogar entgegengesetzte Kräfte auf die beiden Enden der Lenkstange in im wesentlichen vertikaler Richtung ausübt.

Ein wesentlicher Vorteil dieser verschiedenen Ausführungsformen besteht darin, daß es möglich ist, verschiedene Ausgestaltungen von Aufsätzen herzustellen, die den verschiedenen, geschilderten Einstellmöglichkeiten angepaßt sind. Diese verschiedenen Ausführungen von Aufsätzen können dann entsprechend der vorgesehenen Verwendungsart des Fahrrads kurz vor der endgültigen Fertigstellung des Rades ausgewählt und auf dem Gabelkopf befestigt werden, so daß sich mit einfachen Mitteln eine hohe Variabilität ergibt.

## Patentansprüche

1. Fahrrad-Vorderradgabel (10) aus einem Verbundmaterial, bestehend aus zwei Gabelarmen (12, 14), die sich zur Bildung eines stabförmigen Gabelkopfes (18) miteinander vereinigen, wobei der Gabelkopf (18) mit dem Lenkkopf (24) eines Rahmens gelenkig verbindbar ist,
**gekennzeichnet** durch
Organe zur Befestigung der Lenkstange (20) am Ende des Gabelkopfes (18), die zwei Bewegungsarten ermöglichende Einstelleinrichtungen aufweisen, wobei wenigstens eine Bewegungsart eine Drehbewegung ist, daß ein Aufsatz (90) vorgesehen ist, der mit zwei Klemmflächen (100, 102) versehen ist, die einer ersten Einstellachse zugeordnet sind, daß die Lenkstange (20) ebenfalls mit zwei Klemmflächen (110, 112) versehen ist, die einer zweiten Einstellachse zugeordnet sind, und daß zwei längliche Platten (114a, 114b) mit zusammenwirkenden Klemmflächen (120a, 122a, 120b, 122b) und diesen Platten zugeordnete Einspannorgane (124, 126; 136) vorgesehen sind.

2. Vorderradgabel nach Anspruch 1,
dadurch **gekennzeichnet,**
daß beide Bewegungsarten Drehbewegungen sind.

3. Vorderradgabel nach Anspruch 1 oder 2,
dadurch **gekennzeichnet,**
daß die Klemmflächen (120a, 122a, 120b, 122b) vorzugsweise eben sind und daß zwischen den Klemmflächen (120a, 122a, 120b, 122b) stark haftende Scheiben (250) eingeklemmt sind.

4. Vorderradgabel nach Anspruch 3,
dadurch **gekennzeichnet,**
daß die stark haftenden Scheiben Keramikscheiben (250) sind.

5. Vorderradgabel nach einem der vorhergehenden Ansprüche,
dadurch **gekennzeichnet,**
daß die länglichen Platten (114a, 114b) miteinander durch eine formschlüssige Verbindung (254, 256, 258, 260) zusammenwirken.

## Claims

1. Front wheel fork (10) for a cycle made of a composite material comprising two fork arms (12, 14) which unite to form a bar-like fork head (18), with the fork head (18) being pivotally connected to the steering head (24) of a frame, characterised by members for the attachment of the handle-bar (20) to the end of the fork head (18), which have adjustment devices enabling two types of movement, wherein at least one type of movement is a rotary movement, in that a cap (90) is provided having two clamping surfaces (100, 102), which are associated with a first axis of adjustment, in that the handle bar (20) is likewise provided with two clamping surfaces (110, 112), which are associated with a second axis of adjustment, and in that there are provided two elongate plates (114a, 114b) with cooperating clamping surfaces (120a, 122a, 120b, 122b) and clamping members (124, 126; 136) associated with these plates.

2. Front wheel fork in accordance with claim 1, characterized in that both types of movement are rotary movements.

3. Front wheel fork in accordance with claim 1 or claim 2, characterized in that the clamping surfaces (120a, 122a, 120b, 122b) are preferably flat and in that strongly adhering discs (250) are clamped between the clamping surfaces (120a, 122a, 120b, 122b).

4. Front wheel fork in accordance with claim 3, characterized in that the strongly adhering discs are ceramic discs (250).

5. Front wheel fork in accordance with one of the preceding claims, characterized in that the elongate plates (114a, 114b) cooperate with one another through a form-fitted connection (254, 256, 258, 260).

## Revendications

1. Fourche avant (10) de cycle, en matériau composite, comprenant deux bras (12, 14) de fourche se rejoignant pour former une tête de fourche supérieure (18), ladite tête de fourche (18) pouvant être reliée de manière articulée à la tête de direction (24) d'un cadre,
caractérisée en ce qu'elle comprend des organes de montage du guidon (20) à l'extrémité de la tête (18) de la fourche, lesdits organes de montage du guidon (20) comprenant des moyens de réglage à deux modes de déplacement, dont au moins un mode de déplacement en rotation, en ce qu'il est prévu un embout (90) pourvu de deux surfaces de blocage (100, 102) associées à un premier axe de réglage, que le guidon (20) est également pourvu de deux surfaces de blocage (110, 112) associées à un second axe de réglage, et qu'il est prévu deux plaques allongées (114a, 114b) dotées de surfaces de blocage coopérantes (120a, 122a, 120b, 122b) et des organes de serrage (124, 126 ; 136) associés auxdites plaques.

2. Fourche avant de cycle selon la revendication 1, caractérisée en ce que les deux modes de déplacement sont en rotation.

3. Fourche avant de cycle selon l'une ou l'autre des revendications 1 et 2, caractérisée en ce que lesdites surfaces de blocage (120a, 122a, 120b, 122b) sont planes, et qu'il est prévu des rondelles à forte adhérence (250) serrées entre ces surfaces de blocage.

4. Fourche avant de cycle selon la revendication 3, caractérisée en ce que lesdites rondelles à forte adhérence sont des rondelles en céramique (250).

5. Fourche avant de cycle selon l'une des revendications précédentes, caractérisée en ce que lesdites plaques allongées (114a, 114b) coopèrent entre elles par une liaison à verrouillage de formes (254, 256, 258, 260).
